# EUROPEAN PATENT SPECIFICATION

(11) **EP 3 599 876 B1**
(45) Date of publication and mention of the grant of the patent: **15.07.2026**
(21) Application number: 17908529.5
(22) Date of filing: 01.11.2017
(51) Int. Cl.: A23B 2/754, A23B 7/02, A23L 5/10, A23B 7/154, A23L 19/10, A23L 19/00, A23B 7/022, A23L 5/30

(54) **METHOD FOR PRODUCING DRIED SUGAR BEET**
VERFAHREN ZUR HERSTELLUNG VON GETROCKNETER ZUCKERRÜBE
PROCÉDÉ DE PRODUCTION DE BETTERAVE SUCRIÈRE SÉCHÉE

(30) Priority: 29.03.2017 TR 201704749
(43) Date of publication of application: 05.02.2020
(73) Proprietor: Eti Gida Sanayi Ve Ticaret Anonim Sirketi, Eskisehir (TR)
(72) Inventor: KANATLI, Ahmet Firuzhan, Eskisehir (TR)
(74) Representative: Sevinç, Cenk
(86) International application number: PCT/TR2017/050540
(87) International publication number: WO 2018/203856

(56) References cited:
- EP-A1- 0 762 835
- DE-T2- 69 920 574
- ES-T3- 2 230 816
- RU-C1- 2 292 166
- US-A- 2 402 672
- US-A- 4 770 883
- BILJANA SKRBIC ET AL: "Determination of Metal Contents in Sugar Beet (Beta vulgaris) and Its Products: Empirical and Chemometrical Approach", FOOD SCIENCE AND TECHNOLOGY RESEARCH, vol. 16, no. 2, 1 January 2010 (2010-01-01), CH, pages 123 - 134, XP055644571, ISSN: 1344-6606, DOI: 10.3136/fstr.16.123
- FADEL J G ET AL: "Composition and digestibility of beet pulp with and without molasses and dried using three methods", ANIMAL FEED SCIENCE AND TECHNOLOGY, ELSEVIER, AMSTERDAM, NL, vol. 85, no. 1-2, 30 May 2000 (2000-05-30), pages 121 - 129, XP002445494, ISSN: 0377-8401, DOI: 10.1016/S0377-8401(00)00136-X
- MOHAMMADZADEH, M. ET AL.: "Effect of Drying Conditions on Properties of Dried Sugar Beet", IRANIAN JOURNAL OF CHEMICAL ENGINEERING (IJCHE), vol. 7, no. 3, 2010, pages 81 - 87, XP055564255, Retrieved from the Internet <URL:http://www.ijche.com/article_10336.html>

## Description

### Technical Field

The invention relates to a production method of dried sugar beet that enables processing of the sugar beet as a whole, and that allows the total sugar (sucrose, glucose and fructose), protein, fiber, vitamin and mineral content to remain high as compared to known crystal sugar production method by subjecting the beet to various process steps.

### State of Art

Sugar beet (*Beta vulgaris* var. *saccharifera* L.) is a biennial agricultural plant from chenopodiaceae family. Turkey has a significant role in sugar production. This plant Favoring temperate and wet climates has a tuberous root and leaves with large petiolate. The exterior of the plant is yellowish white, while the interior is completely white, and the plant has a conical shape. The structure of the sugar beet comprises of 4-5% cellular tissue, 4-5% chemically bonded water, and 90-95% sap. The composition of beet sap, on the other hand, comprises of 15-18% sugar (sucrose), 1,0-1,6% other non-sugar organic substances, and 0,8% inorganic salts. The dry matter contains 10.7% pectin, 5.1% cellulose, 4.6% nitrogenous matter, 7.2% mineral substances, 0.4% lipids, and 1.8% others. The sugar beet is one of the plants with highest fiber content out of all plant materials. The beet contains abundant amount of vitamins A, B, C and P; zinc, sodium, magnesium, potassium, calcium, iron, phosphorus and brome.

As consuming the sugar, which flavors many foods and beverages consumed by the humans, at its natural vegetable form is not a common practice, the sugar beet should be subjected to a series of processes in order to extract the sugar content therein for rendering it more consumable. As sugar beet is subjected to several industrial processes in order to extract the sugar, sugar production can be performed only at the large scale industrial plants. Today, basically crystallized sucrose is manufactured from sugar beet both in our country and in other countries of the world. The sugar beets are picked up for this purpose and then processed at the sugar factories using the classical methods. After majority of the sugar is extracted, molasses and sugar beet pulp (bagasse) is obtained in addition to the extracted refined sugar. Sugar produced from the sugar beet is at the rate of approximately 10-20% of the total full dry weight.

Molasses is a brown colored liquid with high viscosity with dry matter content of around 80%. 50% of this dry content is sugar while remaining 30% is organic substances and salts. The molasses also contains some mineral substances and different watersoluble compounds. The most important substances that form the molasses are α-amino nitrogen, potassium and sodium. The composition of molasses further comprises sucrose, invert sugar, raffinose, decomposition products of the pectin, lactic acid and nitrogenous matters. It is not economical to reprocess the molasses, which has an extremely high sugar content, in order to recover such sugar. Molasses is used especially at the fermentation industry, and for production of ethyl alcohol, spirit, baker's yeast, and citric acid, and as an input at the feed industry.

The sugar beet pulp, on the other hand, is lignocellulose based pulp and is a valuable animal feed and is fed to the animals either directly as wet and/or dry bagasse, or after mixing with the molasses. Dry beet pulp contains ash approximately in the range of 4-7%, protein in the range of 7-10%, fat in the range of 0,5-1,6%, sucrose in the range of 5-10%, calcium in the range of 0,6-1,1%, magnesium in the range of 0,1-0,3%, sodium in the range of 0,1-0,5%, and potassium in the range of 0,2-1,6% in its dry matter. 75-80% of the full dry weight of the sugar beet pulp comprises of polysaccharides. Said polysaccharides, on the other hand, comprise of approximately 22-24% cellulose, 30% hemicellulose and 25% pectin. Approximately 75% of the fibers present therein are non-soluble, and 25% is soluble fibers. It is also rich in terms of another mineral substance, amino acid diversity and quantities.

In addition to the foregoing, the sugar beets' use as a substrate for production of biogas and bioethanol is also an important aspect.

In extracting refined sugar (crystal sugar) from sugar beet, the stages of processing the beet into sugar are as follows:
1.Harvesting and transportation to the plant
2.Washing, weighing, chopping
3.Obtaining raw juice
4.Cleaning the juice (obtaining refined juice)
5.Concentrating the refined juice
6.Processing into pulp, centrifuging the pulp
7.Crystalizasyon
8.Obtaining raw sugar (centrifuging)
9.Refining the raw sugar

The baking process is applied at the stage of transforming the sugar beet into juice. At this stage, undesirable saponins and bitter and/or odorous substances come off from the sugar beet and the "polyphenol" oxidases that causes darkening are neutralized.

As specified in the "Year 2015 Sector Report" issued by Türkiye Seker Fabrikalari A. 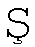 ., 1,976 million tons of refined sugar were produced and total of 2,300 million tons of sugar beet pulp and 1025 tons of molasses were obtained in Turkey in 2015. 345,456 tons of the molasses were used at the yeast and feed industry, and 15,280 tons were used for producing ethyl alcohol. The refined sugar consumption in 2015 were 2,39 million tons.

In the world, the amount of refined sugar produced from sugar beet in 2015 was 32,67 million tons.

Although obtained through challenging and demanding processes, refined sugar cannot be consumed directly, and is used for flavoring various alcoholic and non-alcoholic beverages, confectionery, chocolates, sugary and bakery products, ice-cream, marmalade, halva, jam and similar other foodstuff.

The nutritional elements required for nutrition of the human beings are subdivided into two categories as isodynamic elements and elements that construct the body structure. The isodynamic nutritional elements are carbohydrates and fats. The proteins, on the other hand, act as isodynamic elements only in exceptional cases. A normal person should consume an average of 120 g protein, 40-80 g fat and 300-400 g carbohydrate per day as nutrient. Accordingly, carbohydrates provide 60-70% of the energy required by the human being. Carbohydrates are subdivided into three categories as monosaccharides, disaccharides and polysaccharides depending on their molecular structures. The sucrose, a disaccharide, constitutes some of the sugary compounds required by the human metabolism.

With increasing per diem consumption rates throughout the world each year, sugar provides a significant portion of the nutrition and energy needs of the human beings and makes people happy by fulfilling the flavor requirements. If, however, sugar, which is also naturally present in many plants, is used as an ingredient in various foodstuff, the consumers become obliged to use unnatural refined sugar subjected to many industrial processes. Although refined sugar has no direct harm to the human health in the short term, negative impacts on human health by inducing diseases such as diabetes, obesity, etc. in the long term is mentioned as can be seen from the outcomes of many researches.

The main problem in using sugar beets for producing refined sugar is the inability to pick up the beets throughout the year due to climatic reasons. In many plantation areas, the beets are picked up during autumn season of the year, but not all beets picked in autumn can be processed at the same time. Due to short seasonal production and due to perishable nature of the sugar beet arising from its high water content (70-90%) causes further problems for storage. The problems in storage arise from losing significant amount of the stored beets due to the fact that the sugar content of the beets (sucrose) are biochemically transformed into constituents with less sweetness (trisaccharides such as raffinose). Said sugar loss is not limited only with loss of sucrose, but also glucose and fructose are lost too. This generally leads to significantly reduced sugar content at the sugar beet, which makes production of commercial white sugar or ethanol impossible in case of prolonged storage periods. Sugar beet pulp (bagasse) can be used as animal feed after drying, but use of wet pulp as animal feed is gaining more preference due to high energy costs.

RU 2292166 C1 relates to a method for sugar beet production in powder form. Said method comprises the process steps of washing sugar beets; skinning peelings of sugar beets; grinding sugar beets, acidifying ground sugar beets with citric acid, cooking acidified sugar beets in microwave, drying cooked sugar beets under vacuum, cooling sugar beets down and subsequently grinding into powder in desired size and packaging the ready product.

Application no. "GB285115A" mentions about chopping the sugar beet into small pieces and then directly conducting drying process thereon.

Application no "TR200403623" mentions about a process for obtaining dried confectionary wherein the beets are cleaned and boiled and cooled, and then syrup is added followed by addition of aroma and powdering.

The patent application no. "TR201603388", on the other hand, relates to a sugar beet dessert comprising sugar beet, sugar, water, citric acid and vanilla, and the production method of the sugar beet dessert.

The patent application no. US2402672A relates to a process using vacuum dehydration of beets for making dried sugar beets having a final moisture content of 3.9%. It has been found that the use of vacuum dehydration processes under proper conditions results in the retention of the color and flavor of the original beet even after cooking. All the heat treatments are applied in a vacuumed medium in this process.

The patent application no. DE69920574T2 discloses an additive product for improving the quality of food that is used in the essential from a crushing of sugar rich roots, in particular sugar beet, in particles, the substantially homogeneous composition the percentage by weight of the particles is the following: 65 to 80% sucrose, 10 to 25% vegetable fibers, 0.5 to 1.5 fatty acids, 3 to 6% vegetable proteins, 1 to 3% mineral salts, and a dry matter content of at least 90%. Only heat treatment that is applied is the drying process. The process steps are; a) crushed sugar beet into pieces, b) grinding these pieces into particles passing through a sieve with a mesh size of at least 2 mm, c) these particles are subjected to a drying step under heat until the water content contained in the particles is at most 10%.

Although there are many studies and patents related to different usage options intended for animal consumption, there is no method available where the sugar beet is baked and dried as a whole without extracting the sugar and used as a foodstuff or semi-product thereof.

### The Problems that the Invention Aims to Solve

The primary objective of the invention is to enable offering of other beneficial ingredients such as protein, fiber, vitamin, mineral, etc. to human consumption in addition to the total sugar (sucrose, glucose and fructose) content of the sugar beet.

Another objective of the invention is to enable drying of the beet in its natural form without extracting the sugar content of the sugar beet.

Another objective of the invention is to enable use of byproducts (molasses, sugar beet pulp) obtained during processing of the sugar beet with known methods for human consumption as a whole.

An objective of the invention is to enable use of the by-product (sugar beet pulp), which has extremely valuable nutritional content (protein, fiber, mineral, vitamin), which is hard to store and which is produced in large quantities in the short term, also at the food industry as well as being used as animal feed, the primary area of its use.

Another objective of the invention is to ensure fulfillment of the healthy nutrition conditions without disturbing the natural content by reducing the process steps in crystal sugar production in the known methods.

Another objective of the invention is to ensure reduction of the glycemic index of the dried form of the sugar beet compared to the refined sugar.

Another objective of the invention is to ensure obtaining sugar by subjecting the beet to less number of process steps through processing the sugar beet as a whole.

Another objective of the invention is to ensure elimination of the intrinsic unpleasant odor of the sugar beet by applying thermal process.

Another objective of the invention is to enable production of sugar raw material with commercial value by processing the sugar beet in its natural form.

Another objective of the invention is to prevent waste generation after production process due to substances such as lime used at the crystal sugar production in the known methods and to eliminate the disturbing bad odors of the beet wastes emitted to the environment.

Another objective of the invention is to ensure generalization of use of the sugar beet generally employed for crystal sugar production in other fields.

Another objective of the invention is to ensure easy incorporation of the process into the existing sugar factories as the process can be carried out with the equipment currently available at the sugar factories due to less number of process steps.

### Description of the Invention

The invention relates to a dried sugar beet production method that enables processing of the sugar beet as a whole, which enables high total sugar (sucrose, glucose and fructose), protein, fiber, vitamin and mineral content by subjecting the beet to less number of processes.

It is extremely hard to use the sugar beet by storing the same without processing due to short harvest period, high water content (70-90%), and accordingly short shelf life and the volume it occupies. Furthermore, it is not suitable for use in all fields in the food industry due to its high water content. Therefore, the invention discloses a production method of sugar beet in dried form.

The dried sugar beet production method of the invention is of paramount importance due to short harvest time and shelf life of the sugar beet.

The invention enables not only use of sugar content at significant rates but also preservation of the minerals such as calcium, magnesium, potassium, sodium etc. which are necessary for human body particularly by means of the method for drying the sugar beet.

The non-equalized natural content of the caramelized or non-caramelized dried sugar beet of the invention contains sucrose at the rate of 70-80% by weight, glucose at the rate of 0.9-2% by weight, fructose at the rate of 1.5-3% by weight, fat at the rate of 0.05-1% by weight, protein at the rate of 3-5% by weight, soluble fiber at the rate of 0.5-2% by weight, insoluble fiber at the rate of 10-14,5% by weight, raw cellulose at the rate of 4-6% by weight, and 100-200 mg calcium, 150-250 mg magnesium, 650-750 mg potassium and 150-250 mg sodium per 100 gram.

In its basic form, the dried sugar beet production method of the invention comprises the process steps of cleaning the sugar beet obtained through completely natural means from its exterior dirt, cooking the sugar beet so cleaned, peeling away the cooked beets, chopping into pieces and drying the sugar beet cut into desired size.

The whole beet used for producing the dried beet of the invention should be comprehended as the beets cleaned of certain fruit or vegetable parts during picking or subsequent processing. When picking the beets in this manner, the head of the sugar beets is cut off or their leaves are removed. The beet body so obtained is considered as a whole beet.

As sugar beet perishes shortly after being harvested, which leads to low efficiency, when the unnecessary amount of free water content of the sugar beet is removed and when the beet is processed in such manner to preserve relative amount of water as required for the properties of the product (85-97% dry matter, 15-3% water), a new product containing amino acid, vitamin and salts from the beet within its natural balance is obtained from the sugar beet.

Production of the raw material of the invention so-called completely natural sugar varies depending on the alternates where the cooking process is applied to unpeeled sugar beets or to peeled sugar beets.
A**.** The production method where the cooking process will be applied to unpeeled sugar beets comprises the process steps set forth hereunder.
   1. Washing the sugar beets,
   2. Boiling the washed sugar beets in water and/or with steam and/or cooking the same in microwave/oven,
   3. Cooling the cooked sugar beets,
   4. Peeling off the cooled sugar beets,
   5. Chopping the peeled sugar beets at desired sizes,
   6. Drying the sugar beets cut into pieces,
   7. Grinding the dried sugar beets to desired size.
B. The production method where the cooking process will be applied to peeled sugar beets comprises the process steps set forth hereunder.
   1. Washing the sugar beets,
   2. Peeling the washed sugar beets,
   3. Immersing the peeled sugar beets into organic acids and/or reducing agent solutions,
   4. Boiling the peeled and solution-immersed sugar beets in water and/or with steam and/or cooking the same in microwave/oven,
   5. Cooling the cooked sugar beets,
   6. Chopping the cooled sugar beets at desired sizes,
   7. Drying the sugar beets cut into pieces,
   8. Grinding the dried sugar beets to desired size.

**Washing the sugar beets;** In the dried sugar beet of the invention and production method thereof, first of all the sugar beets obtained through completely natural ways are cleaned from the exterior dirt. With this process, the residues on the peelings of the whole sugar beet are cleaned by means of washing machinery and the foreign materials such as mud, soil, etc. picked up together with the beet are removed from the beet. The quality of the water used during the washing process is important; the water should not contain any stinking elements. Furthermore, the flow rate, quantity and application period of the washing water is maintained at optimum level in order to ensure complete cleaning of the sugar beet.

**Boiling the washed sugar beets in water and/or with steam and/or cooking the same in microwave/oven;** During cooking process of the sugar beets, undesirable saponins and bitter and/or odorous substances come off from the sugar beet and the "polyphenol" oxidases that causes darkening are neutralized. There are alternate methods that could be applied at the cooking phase. The duration of the cooking process by employing these alternate methods varies in the range of 2-4 hours for boiling the whole beet, either with or without peelings, in water. On the other hand, the cooking period for the whole beet, either with or without peelings, at steam varies in the range of 2-6 hours. The cooking period of the whole beet, either with or without peelings, with microwave is 45-130 minutes depending on the power level of the microwave. The period of cooking of the whole beet, either with or without peelings, at an oven is 1-5 hours at the temperature in the range of 150-350°C.

In the production method where the cooking process will be applied on peeled sugar beets, the sugar beet is first immersed into organic acids such as 0,5-3% citric acid, malic acid, etc. and reducing agent solutions for a period of 10-20 minutes in order to prevent darkening during cooking process.

**Cooling of the sugar beets;** the beets removed from the oven are allowed to cool down to the ambient temperature (20-25°C) at this cooling process.

**Peeling the sugar beets;** the peeling process can be carried out either manually or mechanically.

**Chopping the sugar beets at desired sizes;** the chopping process can be performed at desired sizes and shapes. In this manner, chopped beet fragments with increased surface area dries more easily.

If one desires to carry out the chopping process prior to the cooking process, then the washed and cleaned beets are first peeled and then chopped at desired sizes and shapes. Then, such chopped beet fragments are immersed into organic acids such as 0,5-3% citric acid, malic acid, etc. and reducing agent solutions for a period of 10-20 minutes in order to prevent darkening during cooking process. Then the desired cooking alternate, drying and grinding processes are implemented respectively.

**Drying the sugar beets;** the drying process can be implemented with cabin dryers, tunnel dryers, fluidized bed dryers, freeze-drying equipment or via blast drying method. The drying process can be implemented at different temperatures depending on the aroma ingredients at the end product. Caramelisation and Maillard reactions can occur by applying heat due to high sugar content.

If it is desired to obtain caramelized aromas from dried beet, then the drying process is applied at 110-180°C. If it is not desirable to obtain caramelized aromas from dried beet, on the other hand, then the drying process is applied at 90-110°C. This will prevent the reactions where caramelized aroma is obtained.

The humidity of the dried beet can vary in the range of 3-15% depending on the intended area of usage. The duration of the drying process varies depending on the desired humidity value.

Majority of the natural odor of the sugar beet that resembles the smell of soil that emerges during cooking process is eliminated by means of drying process. The undesirable foreign substances are removed on one hand, while the foreign substances that provide a good taste and aroma are created in this manner. In this manner, the dried sugar beet has a pleasant aromatic flavor that attracts the consumers, and can receive commercial interest based on such flavor.

**Grinding of the sugar beets;** the purpose of the grinding process is also to reduce the dried sugar beet into desired size. Electively, the dried sugar beet can be pulverized, or reduced to grain or flake size. Although not a mandatory process step, this process is applied depending on the intended use of the dried beet.

In addition to less energy consumption as being used as an alternate to the refined sugar, the invention further contributes to protein, fiber, vitamin and mineral intake as can be seen from the table provided hereunder.

**Table 1: Dried Sugar Beet Ingredient**

| **Ingredient of the Dried Sugar Beet** | **Quantity By Weight** |
|---|---|
| Protein (%) | 3-5 |
| Fat (%) | 0,05-1 |
| Total sugar (%) | 75-85 |
| Sucrose (%) | 70-80 |
| Glucose (%) | 0,9-2 |
| Fructose (%) | 1,5-3 |
| Total Fiber (%) | 10-15 |
| Soluble Diet Fiber (%) | 0,5-2 |
| Insoluble Diet Fiber (%) | 10-15 |
| Raw (Fiber) Cellulose (%) | 4-6 |
| Calcium (mg/100g) | 100-200 |
| Magnesium (mg/100g) | 150-250 |
| Potassium (mg/100g) | 650-750 |
| Sodium (mg/100g) | 150-250 |

By virtue of the method of the invention, it is possible to transform the sugar beet into a completely natural raw material with no equivalent which is rich in carbohydrate, protein, raw cellulose, pectin, vitamin and mineral content by reducing the water content, which is approximately 70-90%, down to 3-15%, and caramelized or non-caramelized dried sugar beet with water content reduced to 3-15% by weight, the natural content of which contains sucrose at the rate of 70-80% by weight, glucose at the rate of 0.9-2% by weight, fructose at the rate of 1.5-3% by weight, fat at the rate of 0.05-1% by weight, protein at the rate of 3-5% by weight, soluble fiber at the rate of 0.5-2% by weight, insoluble fiber at the rate of 10-14,5% by weight, raw cellulose at the rate of 4-6% by weight, and 100-200 mg calcium, 150-250 mg magnesium, 650-750 mg potassium and 150-250 mg sodium per 100 gram is obtained.

## Claims

1. A production method of dried sugar beet, **characterized by** comprising below process steps;
• Washing the sugar beets in order to clean residues and foreign materials remaining on the peelings,
• Boiling the washed sugar beets in water for 2-4 hours or boiling/cooking the washed sugar beets with steam for 2-6 hours or cooking the washed sugar beets in microwave for 45-130 minutes, or cooking the washed sugar beets in oven at a range of 150-350°C for 1-5 hours,
• Cooling the cooked/boiled sugar beets to the ambient temperature at the range of 20-25°C,
• Peeling off the cooled sugar beets manually or mechanically,
• Chopping the peeled sugar beets at desired sizes in order to increase the surface area and to dry more easily,
• Drying the chopped sugar beets in a manner to ensure that the water content of sugar beets is in the range of 3-15% with cabin dryers, tunnel dryers, fluidized bed dryers or via blast drying method at different temperatures depending on the aroma ingredients at the end product,
• Grinding the dried sugar beets to desired size.

2. A production method of dried sugar beet, **characterized by** comprising below process steps;
• Washing the sugar beets in order to clean residues and foreign materials remaining on the peelings,
• Peeling off the washed sugar beets manually or mechanically,
• Immersing the peeled sugar beets into 0.5-3% citric acid and/or malic acid and/or 0.5-3% reducing agent solutions for a period of 10-20 minutes in order to prevent darkening during cooking process,
• Boiling the peeled and immersed sugar beets in water for 2-4 hours or boiling/cooking the peeled and solution-immersed sugar beets with steam for 2-6 hours or cooking the peeled and solution-immersed sugar beets in microwave for 45-130 minutes, or cooking the peeled and solution-immersed sugar beets in oven at a range of 150-350°C for 1-5 hours,
• Cooling the cooked/boiled sugar beets to the ambient temperature at the range of 20-25°C,
• Chopping the cooled sugar beets at desired sizes in order to increase the surface area and to dry more easily,
• Drying the chopped sugar beets in a manner to ensure that the water content of sugar beets is in the range of 3-15% with cabin dryers, tunnel dryers, fluidized bed dryers or via blast drying method at different temperatures depending on the aroma ingredients at the end product,
• Grinding the dried sugar beets to desired size.

3. A production method of dried sugar beet according to Claim 1 or Claim 2, **characterized in that** sugar beets are dried in the range of 110-180°C in order to obtain caramelized aroma at the process step of drying the cooked/boiled sugar beets.

4. A production method of dried sugar beet according to Claim 1 or Claim 2, **characterized in that** sugar beets are dried in the range of 90-110°C in order to prevent caramelization reaction at the process step of drying the cooked/boiled sugar beets.

## Patentansprüche

1. Verfahren zur Herstellung von getrocknetem Zuckerrüben, **gekennzeichnet durch** die folgenden Verfahrensschritte:
• Waschen der Zuckerrüben, um Rückstände und Fremdkörper von der Schale zu entfernen,
• Kochen der gewaschenen Zuckerrüben in Wasser für 2-4 Stunden oder Dämpfen der gewaschenen Zuckerrüben für 2-6 Stunden oder Garen der gewaschenen Zuckerrüben in der Mikrowelle für 45-130 Minuten oder Garen der gewaschenen Zuckerrüben im Ofen bei 150-350 °C für 1-5 Stunden,
• Abkühlen der gegarten/gekochten Zuckerrüben auf Umgebungstemperatur im Bereich von 20-25 °C,
• Manuelles oder maschinelles Schälen der abgekühlten Zuckerrüben,
• Zerkleinern der geschälten Zuckerrüben auf die gewünschte Größe, um die Oberfläche zu vergrößern und das Trocknen zu erleichtern,
• Trocknen der zerkleinerten Zuckerrüben in einer Weise, die sicherstellt, dass der Wassergehalt der Zuckerrüben im Bereich von 3-15 % liegt, unter Verwendung von Kammertrocknern, Tunneltrocknern, Wirbelschichttrocknern oder mittels Strahltrocknung bei unterschiedlichen Temperaturen, je nach den Aromastoffen im Endprodukt,
• Mahlen der getrockneten Zuckerrüben auf die gewünschte Größe.

2. Verfahren zur Herstellung von getrocknetem Zuckerrüben, **gekennzeichnet durch** die folgenden Verfahrensschritte:
• Waschen der Zuckerrüben, um Rückstände und Fremdkörper von der Schale zu entfernen
• Schälen der gewaschenen Zuckerrüben von Hand oder maschinell,
• Einlegen der geschälten Zuckerrüben in 0,5-3-prozentige Zitronensäure- und/oder Apfelsäure- und/oder 0,5-3-prozentige Reduktionsmittellösungen für einen Zeitraum von 10-20 Minuten, um eine Bräunung während des Kochvorgangs zu verhindern,
• Kochen der geschälten und eingeweichten Zuckerrüben in Wasser für 2-4 Stunden oder Dämpfen der geschälten und in Lösung eingeweichten Zuckerrüben für 2-6 Stunden oder Garen der geschälten und in Lösung eingeweichten Zuckerrüben in der Mikrowelle für 45-130 Minuten oder Garen der geschälten und in Lösung -eingeweichte Zuckerrüben im Ofen bei 150-350 °C für 1-5 Stunden garen,
• Abkühlen der gegarten/gekochten Zuckerrüben auf Umgebungstemperatur im Bereich von 20-25 °C,
• Zerkleinern der abgekühlten Zuckerrüben auf die gewünschte Größe, um die Oberfläche zu vergrößern und das Trocknen zu erleichtern,
• Trocknen der zerkleinerten Zuckerrüben in einer Weise, die sicherstellt, dass der Wassergehalt der Zuckerrüben im Bereich von 3-15 % liegt, unter Verwendung von Kammertrocknern, Tunneltrocknern, Wirbelschichttrocknern oder mittels Strahltrocknung bei unterschiedlichen Temperaturen, abhängig von den Aromastoffen im Endprodukt,
• Mahlen der getrockneten Zuckerrüben auf die gewünschte Größe.

3. Verfahren zur Herstellung von getrockneten Zuckerrüben nach Anspruch 1 oder Anspruch 2, **dadurch gekennzeichnet, dass** die Zuckerrüben im Bereich von 110 bis 180 °C getrocknet werden, um bei dem Verfahrensschritt des Trocknens der gekochten Zuckerrüben ein karamellisiertes Aroma zu erzielen.

4. Verfahren zur Herstellung von getrockneten Zuckerrüben nach Anspruch 1 oder Anspruch 2, **dadurch gekennzeichnet, dass** die Zuckerrüben im Temperaturbereich von 90 bis 110 °C getrocknet werden, um eine Karamellisierungsreaktion beim Trocknen der gekochten Zuckerrüben zu verhindern.

## Revendications

1. Procédé de production de betteraves sucrières séchées, **caractérisé en ce qu'**il comprend les étapes suivantes :
• Lavage des betteraves sucrières afin d'éliminer les résidus et les corps étrangers présents sur leur peau,
• Boulage des betteraves sucrières lavées dans de l'eau pendant 2 à 4 heures, ou boulage/cuisson des betteraves sucrières lavées à la vapeur pendant 2 à 6 heures, ou des betteraves sucrières lavées au micro-ondes pendant 45 à 130 minutes, ou des betteraves sucrières lavées au four à une température comprise entre 150 et 350°C pendant 1 à 5 heures,
• Refroidissement des betteraves sucrières cuites/bouillies à la température ambiante entre 20 et 25 °C,
• Épluchage des betteraves sucrières refroidies manuellement ou mécaniquement,
• Découpage des betteraves sucrières épluchées aux tailles souhaitées afin d'augmenter leur surface et de faciliter leur séchage,
• Séchage des betteraves sucrières découpées de manière à ce que leur teneur en eau soit entre 3 et 15% à l'aide de séchoirs à chambre, de séchoirs à tunnel, de séchoirs à lit fluidisé ou par soufflage à différentes températures en fonction des composants aromatiques souhaités dans le produit final,
• Broyage des betteraves sucrières séchées jusqu'à la taille souhaitée.

2. Procédé de production de betteraves sucrières séchées, **caractérisé en ce qu'**il comprend les étapes suivantes :
• Lavage des betteraves sucrières afin d'éliminer les résidus et les corps étrangers présents sur la peau,
• Épluchage des betteraves sucrières lavées manuellement ou mécaniquement,
• Immersion des betteraves sucrières épluchées dans une solution d'acide citrique et/ou d'acide malique à 0,5-3 % et/ou d'agent réducteur à 0,5-3 % pendant 10 à 20 minutes afin d'empêcher leur noircissement durant la cuisson,
• Boulage des betteraves sucrières pelées et immergées dans de l'eau pendant 2 à 4 heures, ou boulage/cuisson à la vapeur des betteraves sucrières pelées et immergées dans une solution pendant 2 à 6 heures, ou cuisson des betteraves sucrières pelées et immergées dans une solution au micro-ondes pendant 45 à 130 minutes, ou cuisson des betteraves sucrières pelées et immergées dans une solution au four à une température comprise entre 150 et 350°C pendant 1 à 5 heures,
• Refroidissement des betteraves sucrières cuites/bouillies à la température ambiante entre 20 et 25°C,
• Découpage des betteraves sucrières refroidies à la taille souhaitée afin d'augmenter leur surface et de faciliter leur séchage,
• Séchage des betteraves sucrières découpées de manière à ce que leur teneur en eau soit entre 3 et 15%, à l'aide de séchoirs à chambre, de séchoirs à tunnel, de séchoirs à lit fluidisé ou par la méthode de séchage par jet d'air à différentes températures, en fonction des composants aromatiques souhaités dans le produit final,
• Broyage des betteraves sucrières séchées à la taille souhaitée.

3. Procédé de production de betteraves sucrières séchées selon la revendication 1 ou la revendication 2, **caractérisé en ce que** les betteraves sucrières sont séchées à une température comprise entre 110 et 180 °C afin d'obtenir un arôme caramélisé lors de l'étape de séchage des betteraves sucrières cuites/bouillies.

4. Procédé de production de betteraves sucrières séchées selon la revendication 1 ou la revendication 2, **caractérisé en ce que** les betteraves sucrières sont séchées à une température comprise entre 90 et 110 °C afin d'empêcher toute réaction de caramélisation lors de l'étape de séchage des betteraves sucrières cuites/bouillies.
